(19) Europäisches Patentamt
European Patent Office
Office européen des brevets

(11) **EP 3 122 694 B1**

(12) **FASCICULE DE BREVET EUROPEEN**

(45) Date de publication et mention de la délivrance du brevet:
**24.10.2018 Bulletin 2018/43**

(21) Numéro de dépôt: **15717032.5**

(22) Date de dépôt: **25.03.2015**

(51) Int Cl.:
**C03C 17/34** $^{(2006.01)}$

(86) Numéro de dépôt international:
**PCT/FR2015/050762**

(87) Numéro de publication internationale:
**WO 2015/145073 (01.10.2015 Gazette 2015/39)**

(54) **VITRAGE MUNI D'UN EMPILEMENT DE COUCHES MINCES POUR LA PROTECTION SOLAIRE**

VERGLASUNG MIT EINEM DÜNNSCHICHTIGEN STAPEL FÜR SONNENSCHUTZ

GLAZING PROVIDED WITH A THIN-LAYER STACK FOR SOLAR PROTECTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats de validation désignés:
**MA**

(30) Priorité: **28.03.2014 FR 1452688**

(43) Date de publication de la demande:
**01.02.2017 Bulletin 2017/05**

(73) Titulaire: **Saint-Gobain Glass France**
**92400 Courbevoie (FR)**

(72) Inventeurs:
• **MAILLET, Alexandre**
**F-60200 Compiègne (FR)**
• **MAGNE, Constance**
**F-75019 Paris (FR)**
• **AGUIAR, Rosiana**
**F-75015 Paris (FR)**

(74) Mandataire: **Saint-Gobain Recherche Département Propriété Industrielle 39 Quai Lucien Lefranc 93300 Aubervilliers (FR)**

(56) Documents cités:
**WO-A1-2007/028913     US-A- 5 073 451**
**US-A1- 2007 108 043**

**Description**

L'invention concerne les vitrages comprenant un empilement de couches minces agissant sur le rayonnement solaire et destinés plus particulièrement la protection solaire.

Le vitrage selon l'invention est plus particulièrement adapté pour équiper des bâtiments, même s'il n'y est pas limité et que notamment on puisse également l'utiliser dans le domaine automobile, comme vitre latérale, toit ouvrant ou encore lunette arrière.

De façon connue, en sélectionnant la nature chimique, les épaisseurs et la succession des couches minces constituant l'empilement, on peut agir de façon significative sur la quantité d'énergie du rayonnement solaire entrant ou sortant d'un local ou d'un habitacle. En particulier, un tel vitrage permet d'éviter à l'intérieur de ceux-ci un échauffement excessif en été et contribue ainsi à limiter la consommation d'énergie nécessaire à leur climatisation.

L'invention concerne également un tel vitrage utilisé comme allège une fois opacifié, de façon à faire partie d'un panneau de parement de façade, et qui permet, en association avec des vitrages pour la vision, d'offrir des surfaces extérieures de bâtiments entièrement vitrées et uniformes.

Ces vitrages (et allèges) à couches sont soumis à un certain nombre de contraintes : en ce qui concerne les vitrages, les couches employées doivent être, en premier lieu, suffisamment filtrantes vis-à-vis du rayonnement solaire, c'est-à-dire qu'elles doivent permettre l'isolation thermique en laissant toutefois passer au moins une partie de la lumière, telle que mesurée par la transmission lumineuse $T_L$. En outre, ces performances thermiques doivent préserver l'aspect optique, l'esthétisme du vitrage : il est ainsi souhaitable de pouvoir moduler le niveau de transmission lumineuse du substrat, tout en gardant une couleur jugée esthétique et de préférence sensiblement neutre, tout particulièrement en réflexion extérieure. Cela est aussi vrai des allèges en ce qui concerne l'aspect en réflexion.

Selon un autre aspect essentiel, ces couches doivent aussi être suffisamment durables, et cela d'autant plus si, dans le vitrage une fois monté, elles sont sur l'une des faces extérieures du vitrage (par opposition aux faces "intérieures", tournées vers la lame de gaz intercalaire d'un double vitrage par exemple).

Une autre contrainte s'impose aujourd'hui fortement : quand les vitrages sont constitués au moins en partie de substrats verriers, ceux-ci subissent très souvent un ou plusieurs traitements thermiques, par exemple du type bombage si on veut leur conférer un galbe (vitrine), ou encore du type trempe ou encore recuit si on veut qu'ils soient plus résistants et donc moins dangereux en cas de chocs.

Si déposer les couches après le traitement thermique du verre est complexe et coûteux, il est connu également que le dépôt des couches sur le verre avant de procéder à audit traitement thermique peut entraîner une modification sensible des propriétés, notamment optiques et énergétiques, desdits empilements.

On cherche ainsi, et c'est l'objet de la présente invention, des empilements de couches minces qui puissent être aptes à supporter des traitements thermiques sans modifier trop significativement les propriétés optiques/thermiques du vitrage dans son ensemble et sans dégradation de son aspect général observé avant trempe. En particulier, on parlera dans un tel cas de couches "bombables" ou "trempables".

Un exemple de vitrage anti-solaire pour le bâtiment est donné par les brevets EP-0 511 901 et EP-0 678 483 : il s'agit de couches fonctionnelles sur le plan de la filtration des rayonnements solaires qui sont en alliage nickel-chrome, éventuellement nitruré, en acier inox ou en tantale, et qui sont disposées entre deux couches de diélectrique en oxyde métallique comme $SnO_2$, $TiO_2$ ou $Ta_2O_5$. Ces vitrages sont de bons vitrages anti-solaires, présentant des durabilités mécanique et chimique satisfaisantes, mais ne sont pas véritablement "bombables" ou "trempables", car les couches d'oxyde entourant la couche fonctionnelle ne peuvent empêcher son oxydation lors du bombage ou de la trempe, oxydation s'accompagnant d'une modification de la transmission lumineuse, et de l'aspect en général du vitrage dans son ensemble.

Beaucoup d'études ont été réalisées récemment pour rendre les couches bombables/trempables dans le domaine des vitrages bas-émissifs, visant plutôt de hautes transmissions lumineuses contrairement aux anti-solaires. Il a déjà été proposé d'utiliser, au-dessus de couches fonctionnelles en argent, des couches en diélectrique à base de nitrure de silicium, ce matériau étant relativement inerte vis-à-vis de l'oxydation à haute température et s'avérant apte à préserver la couche d'argent sous-jacente, comme cela est décrit dans le brevet EP-0 718 250.

D'autres empilements de couches agissant sur le rayonnement solaire présumés bombables/trempables ont été décrits, ayant recours à des couches fonctionnelles autres que l'argent : le brevet EP-0 536 607 utilise des couches fonctionnelles en nitrure métallique, du type TiN ou CrN, avec des couches de protection en métal ou en dérivés de silicium, le brevet EP-0 747 329 décrit des couches fonctionnelles en alliage au nickel du type NiCr associées avec des couches en nitrure de silicium.

On connaît par ailleurs, de la demande de brevet WO2007/028913, des structures d'empilement utilisant en tant que couche agissant principalement sur le rayonnement solaire du dioxyde de titane ($TiO_2$) ou du dioxyde de Zirconium ($ZrO_2$), cette couche étant déposée sur une sous couche de nitrure de silicium.

Un tel produit est ainsi apparu relativement performant en ce qui concerne ses propriétés de réflexion de la chaleur issu du rayonnement solaire et relativement simple et économe à déposer par la technique de la pulvérisation cathodique assisté par champ magnétique (magnétron). Tel que décrit dans la demande WO2007/028913, le dépôt d'un empilement du type précédemment exposé par une telle technique permet de déposer des empilements de couches dont l'épaisseur peut être maîtrisée au nanomètre près, ce qui autorise l'ajustement de la colorimétrie désirée du vitrage, en particulier sa neutralité colorimétrique. L'empilement ainsi déposé donne également satisfaction du point de vue de ses propriétés de résistance mécanique en température notamment dans des conditions de traitement thermique autour de 600-630°C, caractéristiques des procédés les plus courants de trempe ou de bombage. Ainsi, le vitrage selon la demande WO2007/028913, ayant subi un tel traitement thermique ne présente pas de modifications notables de ses propriétés, que ce soit en termes de performances énergétiques, de colorimétrie. En outre il est indiqué qu'un tel traitement thermique n'entraîne l'apparition d'aucun défaut optique tels que des microfissures ou des trous d'épingle au sein de l'empilement, souvent appelés microcracks ou pineholes dans le domaine.

Les expériences menées par le demandeur ont cependant démontré qu'à plus haute température, c'est-à-dire lorsque le traitement thermique de trempe, bombage ou recuit est effectué au-dessus de 650°C, bien que l'empilement ne présente aucune microfissure ou autre défaut, un phénomène de flou apparaît, sans qu'aucune modification structurale particulière observable au sein du vitrage ne puisse expliquer un tel phénomène.

Par flou, mesuré en pourcentage, il est entendu au sens de la présente invention la perte par diffusion de la lumière, c'est-à-dire de façon classique le rapport entre la partie diffusée de la lumière (fraction diffuse ou $T_d$) sur la lumière directement transmise au travers du vitrage ($T_L$), généralement exprimée en pourcentages. La transmission diffuse mesure ainsi la fraction lumière diffusée par les couches déposées à la surface du substrat de verre. Le flou peut classiquement être mesuré par des techniques de spectroscopie, à l'aide d'un spectrophotomètre, l'intégration sur tout le domaine du visible (380-780 nm) permettant la détermination de la transmission normale $T_L$ et de la transmission diffuse $T_d$.

Egalement, il est possible que de tels vitrages soient utilisés dans le domaine du bâtiment en tant que vitrage d'allège une fois opacifiés, au moins en partie ou le plus souvent totalement.

Le vitrage allège, plus souvent appelé allège dans le domaine, peut par exemple permettre d'occulter des éléments de constructions tels que le câblage électrique, la plomberie, la climatisation ou de manière plus générale tous les éléments de structure du bâtiment.

En particulier, dans les bâtiments incorporant de très grandes zones vitrées, l'utilisation de vitrages d'allèges est avantageuse pour respecter l'esthétisme et l'unité architecturale de la zone vitrée de grande dimension, qui peut couvrir la presque totalité de la surface du bâtiment.

Plus précisément, pour de tels bâtiments, compte tenu de l'importance des surfaces vitrées, les vitrages utilisés doivent comporter sur toute leur surface des empilements présentant des propriétés de contrôle solaire permettant de limiter le coût de la climatisation en été et de préférence des propriétés d'isolation thermique permettant de réduire les déperditions d'énergie émise par le bâtiment en hiver. Les vitrages, présents sur quasiment toute la surface du bâtiment, couvrent donc à la fois les parties qui doivent offrir une transmission lumineuse significative (appelés alors vitrage de vision), et celles dont la transmission doit être pratiquement nulle (effet d'occultation) pour cacher les éléments de structure du bâtiment (vitrage allèges). Dans ce but, il est habituel d'utiliser des couches d'émail opaque pour obtenir un tel masquage.

Pour une esthétique uniforme depuis une vision extérieure du bâtiment, il est utile de conserver le système de couches même dans les parties revêtues de l'émail, ce qui conduit à la nécessité de déposer l'émail sur l'empilement de couches sur au moins une partie, le plus souvent sur la totalité, du vitrage d'allège. Sur ces couches, l'application de la couche d'émail, en particulier le traitement thermique nécessaire à sa formation, peut occasionner également l'apparition de défauts. En particulier, les empilements de couches habituellement formés par dépôt sous vide du type pulvérisation cathodique, moins résistant que les couches pyrolytiques, sont en règle générale plus fragiles à de hautes températures et le dépôt de l'émail engendre fréquemment des défauts visibles après le traitement thermique. Plus précisément, l'émail tel qu'on le dépose de façon habituelle est composé d'une poudre contenant une fritte de verre (la matrice vitreuse) et des pigments employés comme colorants (la fritte et les pigments étant à base d'oxydes métalliques), et un médium appelé aussi véhicule permettant l'application de la poudre sur le verre et son adhésion avec celui-ci au moment du dépôt. Pour obtenir le revêtement émaillé final, il faut ainsi le cuire, et il est fréquent que cette opération de cuisson se fasse concomitamment à l'opération de trempe/bombage du verre. On pourra se reporter pour plus de détails sur des compositions d'émail aux brevets FR-2 736 348, WO96/41773, EP-718 248, EP-712 813, EP-636 588. L'émail, revêtement minéral, est durable, adhérent au verre et donc un revêtement opacifiant idéal. Cependant, comme indiqué précédemment quand le vitrage est préalablement muni de couches minces, son utilisation est délicate car la cuisson de l'émail implique un traitement thermique à haute température, généralement de l'ordre de 650°C, voire supérieure, pour l'empilement de couches. A de telles températures, des substances chimiques issues de la préparation pour l'émail ou de l'émail lui-même tendent à diffuser dans les couches de l'empilement sous-jacentes et les modifier chimiquement. Pour éviter ce phénomène, la demande WO2011/045412 propose d'utiliser une couche superficielle (c'est-à-dire directement au contact de l'émail) de l'empilement à base d'oxyde de titane, d'oxyde de niobium ou d'oxyde de tantale, ladite couche superficielle étant rendue plus résistante par l'incorporation d'un oxyde métallique du groupe Ta, Nb, Al, Zr, Hf, V, Mn, Fe, Co, Ni, Cu, Si ou encore Zr.

Le but de l'invention est alors de mettre au point un vitrage comprenant un substrat de type verrier porteur d'un empilement de couches minces agissant sur le rayonnement solaire incident, qui permette de résoudre les problèmes précédemment exposés. En particulier le vitrage recherché selon l'invention présente des propriétés thermiques adaptées pour la protection solaire des bâtiments, des propriétés optiques de colorimétrie et de transmission lumineuse également adaptées pour une telle utilisation, ainsi qu'une aptitude à supporter les traitements thermiques sans dommage, notamment un émaillage, c'est-à-dire sans apparition de flou, même à très haute température, c'est-à-dire supérieure ou égale à 650°C.

Dans sa forme la plus générale, la présente invention se rapporte à un vitrage de protection solaire comprenant un substrat de préférence en verre muni d'un empilement de couches minces, dans lequel ledit empilement est constitué par la succession des couches suivantes à partir de la surface du verre :

- une sous-couche ou un ensemble de sous-couches, la ou lesdites sous-couches étant constituées de matériaux diélectriques,
- une couche à base d'oxyde de titane comprenant en outre du silicium, le rapport atomique global Si/Ti dans ladite couche étant compris entre 0,01 et 0,25, couche dans laquelle Si et Ti représentent au moins 90% des atomes autres que l'oxygène, de préférence au moins 95%, ou même au moins 97% voire la totalité des atomes autres que l'oxygène, l'épaisseur physique de ladite couche étant comprise entre 20 et 70 nm de préférence entre 20 et 50 nm,
- une surcouche ou un ensemble de surcouches, la ou lesdites surcouches étant constituées de matériaux diélectriques.

Outre la couche à base d'oxyde de titane, l'empilement de couches minces selon la présente invention ne comprend donc que des couches constituées de matériaux diélectriques et ne comprend donc pas en particulier de couches à caractère métallique, notamment du type de celles décrites précédemment pour leurs propriétés de réflexion et/ou d'absorption du rayonnement infrarouge, notamment celles constituées de métaux précieux tels que Ag, Pt, Pd, Au ou encore Cu, ni de couches en nitrure métallique, du type TiN ou CrN, ou encore à base de Nickel, comme NiCr.

Selon des modes de réalisation particuliers et préférés de la présente invention qui peuvent bien entendu le cas échéant être combinés entre eux :

- Les matériaux diélectriques constituant les surcouches et les sous couches sont choisis parmi les oxydes de zinc, de silicium, d'étain, de titane, de zinc et d'étain, les nitrures de silicium et/ou d'aluminium, les oxynitrures de silicium et/ou d'aluminium.
- L'épaisseur optique globale de la ou des sous-couches est comprise entre 30 et 90 nm, de préférence encore 40 et 70 nm.
- L'épaisseur optique globale de la ou des surcouches est comprise entre 7 et 30 nm, de préférence encore entre 10 et 20 nm.
- Le vitrage comprend, entre la surface du verre et la couche d'oxyde de titane, deux sous-couches dont une couche à base d'oxyde de silicium dont l'épaisseur physique est de préférence comprise entre 10 et 20 nm et une couche à base de nitrure de silicium dont l'épaisseur physique est de préférence comprise entre 15 et 25 nm.
- Le vitrage comprend, entre la surface du verre et la couche d'oxyde de titane, une sous couche unique à base de nitrure de silicium dont l'épaisseur physique est de préférence comprise entre 15 et 35 nm.
- Le vitrage comprend, au-dessus de la couche en oxyde de titane, la succession d'une surcouche à base d'oxyde de silicium, de préférence d'épaisseur physique comprise entre 5 et 10 nm, et d'une surcouche à base d'oxyde de titane, de préférence d'épaisseur comprise entre 1 et 3 nm.
- Selon une première réalisation, ledit rapport Si/Ti est homogène dans toute l'épaisseur de la couche à base d'oxyde de titane.
- Selon une autre réalisation différente de la précédente, la couche à base d'oxyde de titane comprend une succession de strates dans lesquelles le rapport Si/Ti varie entre 0 et 0,20.
- Le rapport atomique global Si/Ti dans la couche est compris entre 0,05 et 0,20, de préférence encore est compris entre 0,05 et 0,15.
- La transmission lumineuse $T_L$ du vitrage est comprise entre 50 et 80% et de préférence encore comprise entre 60 et 70% et le facteur solaire FS est voisin de la valeur de $T_L$. Par le terme « voisin », on entend que la différence entre les deux valeurs est inférieure à 5% et de préférence encore est inférieure à 3%, voire est de l'ordre du pourcentage.

Le vitrage selon l'invention peut avoir subi un traitement thermique du type bombage, trempe et/ou recuit.

L'invention se rapporte également à un vitrage d'allège, au moins partiellement opacifié, et de préférence totalement opacifié, par un revêtement supplémentaire, ledit revêtement étant sous la forme d'un émail ou d'une laque.

Dans un tel vitrage d'allège le revêtement supplémentaire sous forme d'émail ou de laque peut être déposé au-dessus de l'empilement de couches.

L'invention se rapporte enfin à un vitrage multiple, en particulier un double vitrage, incorporant un vitrage tel que précédemment décrit.

Comme indiqué précédemment, l'empilement de couches selon l'invention est émaillable à très hautes températures, en particulier, de l'ordre de 650°C voire supérieure, en ce sens qu'on peut déposer la fritte de l'émail sur la face du substrat non revêtu ou de préférence sur la face déjà revêtue de l'empilement de couches et la cuire à haute température sans modifier sensiblement l'aspect optique du vitrage dans son ensemble, par référence à un vitrage de vision muni des mêmes couches, notamment en réflexion extérieure. En particulier, il est possible selon l'invention de déposer l'émail à très haute température sans apparition de flou sur le vitrage. Grace à de tels avantages, il devient possible de proposer des allèges offrant une harmonie de couleur et une grande similarité en aspect extérieur avec les vitrages de vision, et ainsi de constituer des façades entièrement vitrées uniformes et esthétiques.

Selon l'invention, la ou les surcouches ou sous-couches en matériaux diélectriques de l'empilement, notamment celles qui sont à base de silicium, en particulier de nitrure ou d'oxynitrure de silicium, peuvent contenir également un métal minoritaire par rapport au silicium, par exemple de l'aluminium, par exemple jusqu'à 10% en mole par rapport au silicium. Cela est en particulier utile pour accélérer le dépôt de la couche par pulvérisation cathodique assistée par champ magnétique et réactive, où la cible en silicium est rendue plus conductrice par un "dopage" par l'aluminium. Au sens de la présente invention, on entend ainsi plus généralement que les surcouches ou sous couches en matériaux diélectriques sont constituées essentiellement en lesdits matériaux, sans exclure toutefois que d'autres éléments, en particuliers d'autres cations, soient présents mais en quantité très minoritaires, notamment dans le but de faciliter la déposition des couches par les procédés utilisés, tout particulièrement de pulvérisation magnétron.

Par épaisseurs optiques au sens de la présente invention, on entend classiquement le produit de son épaisseur réelle (physique) par son indice de réfraction. Ainsi une épaisseur optique de 50 nm de $Si_3N_4$, dont l'indice de réfraction est d'environ 2,0 correspond un dépôt de 25 nanomètres (épaisseur physique) dudit matériau.

L'invention a pour objet les vitrages "monolithiques" (c'est-à-dire constitués d'un substrat unique) ou les vitrages multiples isolants du type double vitrage ou même triple vitrage, dont au moins l'un des constituants (des feuillets) est un vitrage selon l'invention. De préférence, qu'il s'agisse de vitrages monolithiques ou de double vitrage, les empilements de couches sont disposés en face 2 ou en face 4 (conventionnellement, on numérote les faces des substrats verriers depuis l'extérieur vers l'intérieur de l'habitacle/du local qu'il équipe), et procurent ainsi un effet optimal de protection contre le rayonnement solaire.

Les vitrages intéressant plus particulièrement l'invention ont une $T_L$ de l'ordre de 50 à 80% ou de 60 à 70%, et un facteur solaire FS voisin de la valeur de $T_L$. Ils ont également préférentiellement une coloration relativement neutre avec possiblement une couleur bleue ou verte en réflexion extérieure (du côté du substrat dépourvu de couches), avec notamment dans le système de colorimétrie international (L\*, a\*, b\*) des valeurs de a\* et b\* négatives (avant et après tout traitement thermique éventuel). On a ainsi une teinte agréable et peu intense en réflexion, recherchée dans le domaine du bâtiment.

Au sens de la présente description, les grandeurs optiques et énergétiques selon l'invention sont mesurées selon les données reportées dans la norme internationale ISO9050(2003).

L'invention a également pour objet le substrat à couches au moins partiellement opacifié par un revêtement de type laque ou émail, en vue de faire des allèges, où le revêtement opacifiant peut être en contact direct avec la face du substrat déjà revêtue de l'empilement de couches. L'empilement de couches peut donc être parfaitement identique pour le vitrage vision et pour l'allège. On considère en particulier selon l'invention comme "émaillable", la face du substrat déjà pourvu d'un empilement de couches minces et sur lequel on peut déposer selon les techniques classiques une composition d'émail, sans apparition de défauts optiques dans l'empilement, et avec une évolution optique très limitée, et notamment sans l'apparition de flou. Cela signifie également que l'empilement présente une durabilité satisfaisante, sans détérioration gênante des couches de l'empilement au contact de l'émail ni au cours de sa cuisson, ni au cours du temps une fois le vitrage monté.

Si l'application plus particulièrement visée par l'invention est le vitrage pour le bâtiment, il est clair que d'autres applications sont envisageables, notamment dans les vitrages de véhicules (mis à part le pare-brise où l'on exige une très haute transmission lumineuse), comme les verres latéraux, le toit-auto, la lunette arrière.

Les avantages de la présente invention sont illustrés à l'aide des exemples non limitatifs qui suivent, selon l'invention et comparatifs.

Tous les substrats sont en verre clair de 6 mm d'épaisseur de type Planilux commercialisé par la société Saint-Gobain Glass France.

Toutes les couches sont déposées par les techniques bien connues de pulvérisation cathodique assistée par champ magnétique. Plus précisément :

- les couches à base d'oxyde de titane sont déposées à partir de cibles métalliques de titane comprenant également selon les exemples du silicium ou du zirconium, les cibles étant pulvérisées par un plasma en atmosphère oxydante pour le dépôt des différentes couches à base d'oxyde de titane,

- les couches en nitrure de silicium sont déposées à partir d'une cible en silicium métallique comprenant 8% en masse d'aluminium, pulvérisées dans une atmosphère réactive contenant de l'azote (40% Ar et 60% $N_2$ pour $SiN_x$). Les couches en nitrure de silicium contiennent donc également uns quantité minoritaire d'aluminium.
- les couches en oxyde de silicium sont déposées à partir d'une cible en silicium métallique de même composition que la précédente, pulvérisées dans une atmosphère réactive oxydante.

Les exemples qui suivent ont été réalisés pour l'obtention de vitrages munis d'empilements dont l'épaisseur et la nature des couches est ajustée pour l'obtention d'une même performance énergétique, c'est à dire un facteur solaire de 68%.

## EXEMPLE 1

Dans cet exemple comparatif et conforme à l'enseignement de la demande antérieure WO2007/028913, un empilement constitué d'une sous couche de nitrure de silicium, d'une couche d'oxyde de titane $TiO_x$ et de deux sur-couches en $SiO_2$ et en $TiO_x$, est déposé sur le substrat verrier selon la séquence suivante :

Verre / $SiN_x$ (30 nm)/TiOx (22 nm)/$SiO_2$ (7 nm) /TiOx (1 nm)

Dans cet exemple comparatif, la couche d'oxyde de titane est déposée à partir d'une cible métallique constituée uniquement de titane.

## EXEMPLE 2

Dans cet exemple selon l'invention, un empilement semblable à celui décrit selon l'exemple 1 est déposé sur le même substrat mais la couche de $TiO_x$ est remplacée par une couche à base de $TiO_x$, comprenant également du silicium. La couche est déposée à partir d'une cible métallique comprenant un alliage de titane et de silicium dans une proportion atomique de 90/10. Les épaisseurs des différentes couches constitutives de l'empilement sont en outre ajustées selon les techniques de l'art pour que la performance énergétique du vitrage ainsi obtenu soit identique à celle du vitrage selon l'exemple 1 précédent.

L'empilement déposé correspond à la séquence suivante :

Verre / $SiN_x$ (23 nm)/$Ti_{0,9}Si_{0,1}O_x$ (31 nm)/$SiO_2$ (7 nm) /TiOx (1 nm)

Il a été vérifié par spectroscopie de rayons X (microsonde EPMA) que les proportions atomiques de titane et de silicium dans la couche à base d'oxyde de titane déposée de cette façon correspondent sensiblement à ceux présents initialement dans la cible métallique, le rapport atomique Si/Ti mesuré étant d'environ 0,1.

## EXEMPLE 3

Dans cet exemple comparatif, un empilement de même nature que celui décrit selon l'exemple 1 est déposé sur le même substrat mais la couche de $TiO_x$ est remplacée par une couche à base de $TiO_x$ comprenant également du zirconium. La couche est déposée à partir d'une cible métallique comprenant un alliage de titane et de zirconium dans une proportion atomique de 90/10. Les épaisseurs des différentes couches constitutives de l'empilement sont en outre ajustées selon les techniques de l'art pour que la performance énergétique du vitrage ainsi obtenu soit identique à celle du vitrage selon l'exemple 1 précédent.

L'empilement déposé correspond donc à la séquence suivante :

Verre / $SiN_x$ (25 nm)/$Ti_{0,9}Zr_{0,1}O_x$ (30 nm)/$SiO_2$ (7 nm) /TiOx (1 nm)

Les propriétés optiques et la colorimétrie des différents vitrages ainsi obtenues selon les exemples 1 à 3 sont mesurées selon les critères suivants :

- transmission $T_L$ : transmission lumineuse en % selon l'illuminant $D_{65}$,
- réflexion lumineuse coté verre : ($RL_v$) en %,
- a*($R_v$), b*($R_v$) : coordonnées colorimétriques en réflexion extérieure selon le système de colorimétrie L*, a*, b*.
- réflexion lumineuse coté couche : ($RL_c$) en %,
- a*($R_c$), b*($R_c$) : coordonnées colorimétriques en réflexion extérieure selon le système de colorimétrie L*, a*, b*,
- Transmission énergétique : facteur solaire FS en % qui mesure le rapport entre l'énergie totale entrant dans le local et l'énergie solaire incidente.

Tableau 1

| EXEMPLE | TRANSMISSION | | | REFLEXION COTE COUCHE (intérieure) | | | | REFLEXION COTE VERRE (extérieure) | | | | TRANSMISSION ENERGETIQUE (Facteur Solaire) |
|---|---|---|---|---|---|---|---|---|---|---|---|---|
| | $T_L$ | $a^*$ | $b^*$ | $RL_c$ | $L^*$ | $a^*_{(Rc)}$ | $b^*_{(Rc)}$ | $RL_v$ | $L^*$ | $a^*_{(Rv)}$ | $b^*_{(Rv)}$ | FS (%) |
| Exemple 1 | 66 | 0,0 | 2,4 | 31 | 63 | -1,8 | -3,8 | 30 | 61 | -2,8 | -3,6 | 68 |
| Exemple 2 | 67 | 0,0 | 2,3 | 31 | 63 | -2,0 | -3,2 | 30 | 61 | -3,1 | -2,7 | 68 |
| Exemple 3 | 67 | 0,1 | 1,8 | 31 | 63 | -2,0 | -2,8 | 30 | 61 | -3,0 | -2,6 | 68 |

Les résultats reportés dans le tableau 1 montrent que les performances optiques, colorimétriques et énergétiques des trois exemples sont sensiblement similaires.

Les empilements précédents sont ensuite soumis au même traitement thermique que celui indiqué dans la demande précédente WO2007/028913, consistant en une chauffe à 620°C pendant 10 minutes, suivi d'une trempe.

On définit ΔE* de la façon suivante :

$$\Delta E^* = \left(\Delta L^{*2} + \Delta a^{*2} + \Delta b^{*2}\right)^{1/2},$$

avec ΔL*, Δa* et Δb* la différence dans les mesures de L*, a* et b* avant et après traitement thermique.

Le ΔE* avant et après traitement thermique est de l'ordre ou proche de 1% et tous les vitrages conservent leur propriété anti-solaire inchangée, telles que mesurées par le facteur FS. Ils sont aussi parfaitement calibrés sur le plan esthétique, tout particulièrement en réflexion extérieure où les valeurs de a* et b* sont proches de zéro ou légèrement négatives, donnant une couleur très neutre ou légèrement bleu-verte acceptée pour les vitrages à forte réflexion extérieure. Toutes les valeurs mesurées évoluent très faiblement sous l'influence du traitement thermique : les valeurs de $T_L$ et FS sont conservées à environ 1% près, les données colorimétriques changent très peu, il n'y a aucun basculement d'une teinte vers une autre teinte en réflexion extérieure. Aucun défaut optique du type microfissures ou trous d'épingles n'est observé sur les trois vitrages.

La résistance des empilements à des traitements thermiques à plus haute température est ensuite mesurée selon le protocole expérimental suivant :

Des lamelles des mêmes vitrages que précédemment décrits selon les exemples 1 à 3 sont dans un premier temps recouverts d'une patte d'émaillage au-dessus de l'empilement de couches minces, déposée par sérigraphie et consolidée par un séchage à 160°C.

Les lamelles sont ensuite soumises à un traitement thermique dans un four à gradient comprenant 3 zones de résistances différentes. Les consignes des 3 zones sont initialement réglées de telle façon que la température subie par les lamelles varie d'une extrémité à l'autre entre 580 et 680°C.

Le gradient est mesuré au moment de la sortie du verre du four à gradient à l'aide d'un pyromètre qui enregistre 14 points de mesure sur l'émail.

Après refroidissement, il est vérifié qu'aucun des échantillons ne présente de défaut optique du type microfissures ou trous (pineholes). La surface des empilements sur les trois échantillons apparait ainsi régulière, homogène et sans défauts.

La mesure des paramètres L*, a*, b* en réflexion est effectuée dans un deuxième temps à travers le verre du côté de la face non recouverte (c'est-à-dire coté verre). La mesure est effectuée à l'aide d'un spectrocolorimètre commercial Minolta CM-600d en mode D65 (illuminant D65). Une telle mesure apparait représentative de l'observation d'un vitrage depuis l'extérieur.

En outre, elle constitue une mesure indirecte du flou généré à la surface du vitrage, vu de l'extérieur. En particulier, la couche d'émail noir étant une couche absorbante de la lumière directement transmise à travers le vitrage, le paramètre L* mesuré en réflexion par le spectrocolorimètre à la surface de la lamelle (coté verre) est directement proportionnel à la diffusion de la lumière générée au niveau de l'empilement de couches minces. Autrement dit le paramètre L* mesuré coté verre est d'autant plus important que la fraction diffusée de la lumière par le vitrage (en particulier par l'empilement de couches) est importante.

Les tests effectués par la société déposante ont montré qu'une valeur mesurée de L* de l'ordre de 10 ou supérieure apparait perceptible à l'oeil nu. En particulier, au-delà de cette valeur critique du flou, le vitrage perd sa transparence et présente un aspect laiteux (translucide) indésirable, et ce d'autant plus que le L* est élevé.

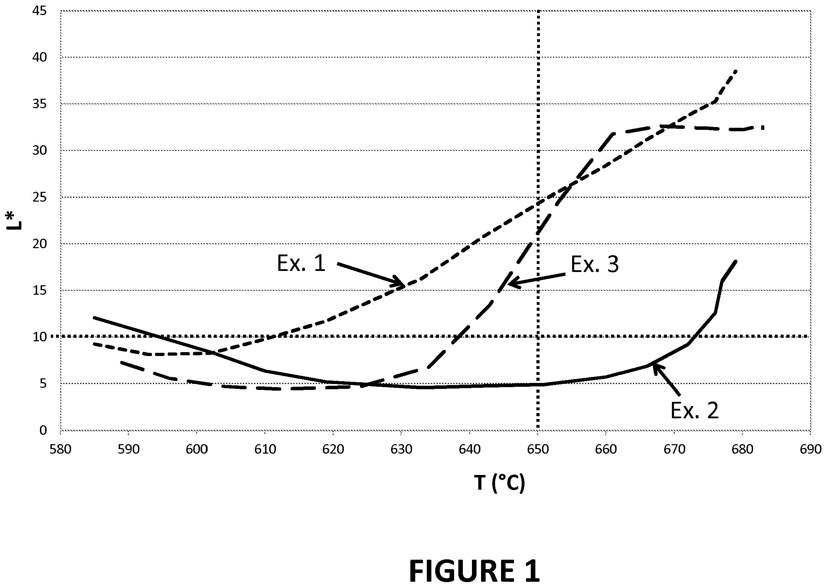

On a reporté sur la figure 1 ci-jointe, en fonction du gradient de température subi par les différents échantillons, les différentes valeurs ainsi mesurées de L*. On peut observer des différences significatives du flou en fonction de la nature de la couche à base d'oxyde de titane présente dans l'empilement, et en particulier de la température critique de chauffage au-delà de laquelle le vitrage muni de son empilement présente une valeur L* trop importante, c'est-à-dire typiquement supérieure à 10 : Cette température est de 610°C pour le vitrage comprenant la couche en $TiO_x$ uniquement, de 640°C pour le vitrage comprenant la couche en $Ti_{0,9}Zr_{0,1}O_x$ et de 675°C pour le vitrage comprenant la couche en $Ti_{0,9}Si_{0,1}O_x$.

Tout particulièrement, les données reportées sur le graphe de la figure 1 démontrent que seul le vitrage comprenant la couche en $Ti_{0,9}Si_{0,1}O_x$ dans l'empilement de contrôle solaire peut subir un traitement thermique de l'ordre de 650°C, notamment nécessaire dans un procédé de dépôt d'un email noir à la surface du vitrage. En conclusion, les vitrages de protection solaire selon l'invention sont très avantageux pour équiper des bâtiments, sans exclure des applications dans l'automobile et tous véhicules : les vitres latérales, arrière, le toit-auto, qui peuvent d'ailleurs présenter des revêtements émaillés. Avec un empilement de couches fixé, notamment selon les valeurs de $T_L$ et de transmission énergétique (FS) que l'on recherche, on peut ainsi, sans avoir à le modifier, fabriquer des vitrages pour la vision qui ne sont pas destinés à subir des traitements thermiques ou qui doivent être bombés/trempés/recuits, fabriquer des allèges en bonne harmonie colorimétrique avec les vitrages visions, qui peuvent être laquées ou émaillées : on peut ainsi standardiser la fabrication des couches interférentielles sur des substrats de grandes dimensions, ce qui est un grand avantage sur le plan industriel.

## Revendications

1. Vitrage de protection solaire comprenant un substrat, de préférence verrier, muni d'un empilement de couches minces agissant sur le rayonnement solaire, dans lequel ledit empilement est constitué par la succession des couches suivantes, à partir de la surface du verre :

   - une sous-couche ou un ensemble de sous-couches, la ou lesdites sous-couches étant constituées de matériaux diélectriques,
   - une couche à base d'oxyde de titane comprenant en outre du silicium, le rapport atomique global Si/Ti dans ladite couche étant compris entre 0,01 et 0,25 et dans laquelle Si et Ti représentent au moins 90% des atomes autres que l'oxygène, l'épaisseur de ladite couche étant comprise entre 20 et 70 nm,
   - une surcouche ou un ensemble de surcouches, la ou lesdites surcouches étant constituées de matériaux diélectriques.

2. Vitrage selon la revendication 1, dans lequel les matériaux diélectriques constituant les surcouches et les sous couches sont choisis parmi les oxydes de zinc, de silicium, d'étain, de titane, de zinc et d'étain, les nitrures de silicium et/ou d'aluminium, les oxynitrures de silicium et/ou d'aluminium.

3. Vitrage selon l'une des revendications précédentes, dans lequel l'épaisseur optique globale de la ou des sous-couches est comprise entre 30 et 90 nm.

4. Vitrage selon l'une des revendications précédentes, dans lequel l'épaisseur optique globale de la ou des surcouches est comprise entre 7 et 30 nm.

5. Vitrage selon l'une des revendications précédentes, comprenant entre la surface du verre et la couche d'oxyde de titane deux sous-couches dont une couche à base d'oxyde de silicium et une couche à base de nitrure de silicium.

6. Vitrage selon l'une des revendications 1 à 4, comprenant entre la surface du verre et la couche d'oxyde de titane une sous-couche unique à base de nitrure de silicium.

7. Vitrage selon l'une des revendications précédentes, comprenant, au-dessus de la couche en oxyde de titane, la succession d'une surcouche à base d'oxyde de silicium et d'une surcouche à base d'oxyde de titane.

8. Vitrage selon l'une des revendications précédentes, dans lequel le rapport Si/Ti est homogène dans toute l'épaisseur de la couche à base d'oxyde de titane.

9. Vitrage selon l'une des revendications 1 à 6, dans lequel la couche à base d'oxyde de titane comprend une succession de strates dans lesquelles le rapport Si/Ti varie entre 0 et 0,20.

10. Vitrage selon l'une des revendications précédentes, dans lequel le rapport atomique global Si/Ti dans la couche est compris entre 0,05 et 0,20, de préférence est compris entre 0,05 et 0,15.

11. Vitrage selon l'une des revendications précédentes, dans lequel la transmission lumineuse $T_L$ compris entre 50 et 80% et de préférence compris entre 60 et 70%, et présentant un facteur solaire FS voisin de la valeur de $T_L$.

12. Vitrage selon l'une des revendications précédentes, **caractérisé en ce qu'**il a subi un traitement thermique du type bombage, trempe et/ou recuit.

13. Vitrage d'allège selon l'une des revendications précédentes, au moins partiellement, et de préférence totalement, opacifié par un revêtement supplémentaire ledit revêtement étant sous forme d'un émail ou d'une laque.

14. Vitrage d'allège selon la revendication précédente, dans lequel le revêtement supplémentaire sous forme d'émail ou de laque est déposé au-dessus de l'empilement de couches.

15. Vitrage multiple, en particulier double vitrage, incorporant un vitrage ou un panneau selon l'une des revendications précédentes.

**Patentansprüche**

1. Sonnenschutzverglasung, umfassend ein Substrat, bevorzugt aus Glas, das mit einem Stapel dünner Schichten versehen ist, der auf die Sonnenstrahlung einwirkt, wobei der Stapel ausgehend von der Glasoberfläche aus der Abfolge der folgenden Schichten gebildet ist:

   - einer Unterschicht oder einer Anordnung von Unterschichten, wobei die Unterschicht oder die Unterschichten von dielektrischen Materialien gebildet sind,
   - einer Schicht auf Titanoxidbasis, die darüber hinaus Silicium umfasst, wobei das Gesamtatomverhältnis Si/Ti in der Schicht zwischen 0,01 und 0,25 inklusive liegt und wobei Si und Ti mindestens 90 % der Atome, die nicht Sauerstoff sind, ausmachen, wobei die Dicke der Schicht zwischen 20 und 70 nm inklusive liegt,
   - einer Oberschicht oder einer Anordnung aus Oberschichten, wobei die Oberschicht oder die Oberschichten von dielektrischen Materialien gebildet sind.

2. Verglasung nach Anspruch 1, wobei die dielektrischen Materialien, welche die Oberschichten und die Unterschichten bilden, aus den Zink-, Silicium-, Zinn-, Titan-, Zink- und Zinnoxiden, den Silicium- und/oder Aluminiumnitriden und den Silicium- und/oder Aluminiumoxinitriden ausgewählt sind.

3. Verglasung nach einem der vorhergehenden Ansprüche, wobei die optische Gesamtdicke der Unterschicht oder der Unterschichten zwischen 30 und 90 nm inklusive liegt.

4. Verglasung nach einem der vorhergehenden Ansprüche, wobei die optische Gesamtdicke der Oberschicht oder der Oberschichten zwischen 7 und 30 nm inklusive liegt.

5. Verglasung nach einem der vorhergehenden Ansprüche, umfassend zwischen der Oberfläche des Glases und der Titanoxidschicht zwei Unterschichten, davon eine Schicht auf Siliciumoxidbasis und eine Schicht auf Siliciumnitridbasis.

6. Verglasung nach einem der Ansprüche 1 bis 4, umfassend zwischen der Oberfläche des Glases und der Titanoxidschicht eine einzige Unterschicht auf Siliciumnitridbasis.

7. Verglasung nach einem der vorhergehenden Ansprüche, umfassend, über der Schicht aus Titanoxid, die Abfolge aus einer Oberschicht auf Siliciumoxidbasis und einer Oberschicht auf Titanoxidbasis.

8. Verglasung nach einem der vorhergehenden Ansprüche, wobei das Verhältnis Si/Ti in der gesamten Dicke der Schicht auf Titanoxidbasis homogen ist.

9. Verglasung nach einem der Ansprüche 1 bis 6, wobei die Schicht auf Titanoxidbasis eine Abfolge von Straten umfasst, in denen das Verhältnis Si/Ti zwischen 0 und 0,20 variiert.

10. Verglasung nach einem der vorhergehenden Ansprüche, wobei das Gesamtatomverhältnis Si/Ti in der Schicht zwischen 0,05 und 0,20 inklusive , bevorzugt zwischen 0,05 und 0,15 inklusive, liegt.

11. Verglasung nach einem der vorhergehenden Ansprüche, wobei die Lichttransmission $T_L$ zwischen 50 und 80 % inklusive und bevorzugt zwischen 60 und 70 % inklusive liegt und einen Gesamtenergiedurchlassgrad FS nahe dem Wert von $T_L$ aufweist.

12. Verglasung nach einem der vorhergehenden Ansprüche, **dadurch gekennzeichnet, dass** sie einer Wärmebehandlung wie Biegen, Vorspannen und/oder Teilvorspannen unterzogen wurde.

13. Brüstungsverglasung nach einem der vorhergehenden Ansprüche, die zumindest teilweise und bevorzugt vollständig durch eine zusätzliche Beschichtung blickdicht gemacht wurde, wobei die Beschichtung in Form eines Emails oder eines Lacks vorliegt.

**14.** Brüstungsverglasung nach dem vorhergehenden Anspruch, wobei die zusätzliche Beschichtung in Form von Email oder von Lack über dem Schichtenstapel aufgebracht ist.

**15.** Mehrfachverglasung, insbesondere Doppelverglasung, mit einer Verglasung oder einer Tafel nach einem der vorhergehenden Ansprüche.


**Claims**

**1.** A solar protection glazing comprising a substrate, preferably a glass substrate, provided with a stack of thin layers which act on solar radiation, in which said stack consists of the succession of the following layers, starting from the surface of the glass:

  - an underlayer or a set of underlayers, said underlayer(s) consisting of dielectric materials,
  - a layer based on titanium oxide also comprising silicon, the overall Si/Ti atomic ratio in said layer being between 0.01 and 0.25, and in which Si and Ti represent at least 90% of the atoms other than oxygen, the thickness of said layer being between 20 and 70 nm,
  - an overlayer or a set of overlayers, said overlayer(s) consisting of dielectric materials.

**2.** The glazing as claimed in claim 1, wherein the dielectric materials constituting the overlayers and the underlayers are chosen from zinc oxides, silicon oxides, tin oxides, titanium oxides, zinc tin oxides, silicon and/or aluminum nitrides, and silicon and/or aluminum oxynitrides.

**3.** The glazing as claimed in either of the preceding claims, wherein the overall optical thickness of the underlayer(s) is between 30 and 90 nm.

**4.** The glazing as claimed in one of the preceding claims, wherein the overall optical thickness of the overlayer(s) is between 7 and 30 nm.

**5.** The glazing as claimed in one of the preceding claims, comprising, between the surface of the glass and the layer of titanium oxide, two underlayers, including one layer based on silicon oxide and one layer based on silicon nitride.

**6.** The glazing as claimed in one of claims 1 to 4, comprising, between the surface of the glass and the layer of titanium oxide, a single underlayer based on silicon nitride.

**7.** The glazing as claimed in one of the preceding claims, comprising, on top of the layer of titanium oxide, the succession of an overlayer based on silicon oxide and of an overlayer based on titanium oxide.

**8.** The glazing as claimed in one of the preceding claims, wherein the Si/Ti ratio is homogeneous throughout the thickness of the layer based on titanium oxide.

**9.** The glazing as claimed in one of claims 1 to 6, wherein the layer based on titanium oxide comprises a succession of strata in which the Si/Ti ratio ranges between 0 and 0.20.

**10.** The glazing as claimed in one of the preceding claims, wherein the overall Si/Ti atomic ratio in the layer is between 0.05 and 0.20, preferably is between 0.05 and 0.15.

**11.** The glazing as claimed in one of the preceding claims, wherein the light transmission $T_L$ is between 50% and 80% and preferably between 60% and 70%, and has a solar factor SF around the value of $T_L$.

**12.** The glazing as claimed in one of the preceding claims, **characterized in that** it has undergone a heat treatment of the bending, tempering and/or annealing type.

**13.** A spandrel glazing as claimed in one of the preceding claims, which is at least partially, and preferably totally, opacified with an additional coating, said coating being in the form of an enamel or of a lacquer.

**14.** The spandrel glazing as claimed in the preceding claim, wherein the additional coating in the form of enamel or lacquer is deposited on top of the stack of layers.

**15.** A multiple glazing, in particular double glazing, incorporating a glazing or a panel as claimed in one of the preceding claims.

**FIGURE 1**

**EP 3 122 694 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0511901 A
- EP 0678483 A
- EP 0718250 A
- EP 0536607 A
- EP 0747329 A
- WO 2007028913 A
- FR 2736348
- WO 9641773 A
- EP 718248 A
- EP 712813 A
- EP 636588 A
- WO 2011045412 A
- IS 090502003